# EUROPÄISCHE PATENTANMELDUNG

(11) **EP 2 179 903 A2**
(43) Veröffentlichungstag der Anmeldung: **28.04.2010**
(21) Anmeldenummer: 09008047.4
(22) Anmeldetag: 19.06.2009
(51) Int. Cl.: B60V 1/08, B60V 1/14, B60V 1/18, B60V 1/04

(54) **Verfahren zur Erzeugung des Kräftesystems für ein Mehrzweckluftverkehrsmittel und Mehrzweckluftverkehrsmittel zur Durchführung des Verfahrens**

(30) Priorität: 24.10.2008 RU 2008142316
(71) Anmelder: Spashchenko, Victor, Respublika Karelija (RU)
(72) Erfinder: Spashchenko, Victor, Respublika Karelija (RU)
(74) Vertreter: Jeck, Anton

(57) **Zusammenfassung**

Die Erfindung betrifft ein Verfahren zur Erzeugung des Kraftsystems für ein Mehrzweckflugverkehrsmittel, einschließlich der Erzeugung von Auftriebs-, Zug- und Steuerkräften unter Einsatz der Energie eines Antriebs-Drucksystems, dass das Antriebs-Drucksystem innerhalb eines Luftwegs ein Luftarbeitsmittel bildet und der Luftweg ein Kanal- und Klappensystem zur Regelung des Arbeitsmittelstroms aufweist, wobei das Profil des Arbeitsmittels eine aerodynamische Form hat und das komplette Antriebs-Drucksystem im hinteren Teil des Rumpfkörpers angeordnet ist und wobei innerhalb des Rumpfkörpers ein Luftweg mit Kanälen ausgebildet wird. Die Auftriebskräfte des Mehrzweckluftverkehrsmittel lassen sich unter gleichzeitiger Verbesserung des Fahrverhaltens beim senkrechten Aufsteigen und senkrechtem Abstieg vergrößern. Die Profile der Antriebsmittel und die gesamte Gestaltung des Mehrzweckflugverkehrsmittels erhalten eine bestimmte Form, und im Körper (Rumpf) des Mehrzweckluftverkehrsmittels werden Luftkanäle mit Lüftern und Düsen an ganz bestimmten Stellen vorgesehen.

## Beschreibung

Die Erfindung betrifft ein Verfahren zur Erzeugung des Kräftesystems für ein Mehrzweckluftverkehrsmittel nach dem Oberbegriff des Anspruchs 1 und ein Mehrzweckluftverkehrsmittel zur Durchführung des Verfahrens.

Die Erfindung betrifft ein Land- und Luftverkehrsmittel, das auf einem Luftkissen schweben, senkrecht aufsteigen, schweben und frei liegen kann.

Es ist ein Verfahren zur Verbesserung des Gleitverhältnisses eines Flugzeugs sowie die Konstruktion des Flugzeugs für die Durchführung des Verfahrens (internationale Anmeldung Nr. 096/33896, IPC B60V1/08, Datum der internationalen Veröffentlichung 31.10.96) bekannt. Das genannte Verfahren besteht darin, dass beim Fliegen des Flugzeugs eine Überdruckzone zwischen seinem Flügel und der Abschirmfläche (Bodenfläche) entsteht. Wird die Geschwindigkeit erreicht, die die Bodeneffektgeschwindigkeit überschreitet, so wird die Luft aus dem Staugebiet teilweise abgeleitet und bis zu einer Geschwindigkeit beschleunigt, welche die Anströmluftgeschwindigkeit überschreitet. Danach wird die Luft auf die Saugfläche in Richtung der Tragflügelhinterkante ausgelassen. Infolge der Anströmgeschwindigkeitserhöhüng der Saugfläche fällt hier der Druck ab. Folglich nimmt die Auftriebskraft zu. Das erhöht im Endeffekt das Auftriebsverhältnis des Flugzeugs.

Das Flugzeug weist einen Gleitkörper auf. Zum Gleitkörper gehören ein linker und ein rechter Flügel mit Längs- und Querstringern (Versteifungselementen) und Kanälen. Die Kanäle liegen zwischen den Längsstringern. Die Beschleunigung des Flugzeugs bis über den Bodeneffektbereich bedingt eine Flughöhenzunahme und den Abbau der Bodeneffektkomponente der Auftriebskraft.

Der Mangel des bekannten Flugzeugs ist ein Fehlen der Auftriebskräfte, um einen Senkrechtstart und eine Senkrechtlandung vornehmen zu können.

Der vorgeschlagenen Erfindung am nächsten kommt ein Verfahren zur Erzeugung des Krafthaushalts eines Flugzeugs und ein Flugzeug - das so genannte Amphibienfahrzeug (Land- und Luftfahrzeug) - für die Durchführung des Verfahrens (RU 2317220). Das Verfahren zur Erzeugung des Krafthaushalts des Flugzeugs umfasst die Erzeugung von Auftriebs-, Zug- und Steuerkräften unter Einsatz der Energie eines Antriebs-Drucksystems. Dieses Antriebs-Drucksystem entwickelt ein Gas-LuftArbeitsmittel, welches im Gasluftweg gebildet wird. Der Gasluftweg enthält ein Kanal- und Klappensystem zur Regelung der Strömungen des Gasluftwegs.

Dafür wird das Flugzeug mit einer Plattform versehen. Die Plattform wird zusammen mit dem Tragflügel als zusammengesetzter Flügel ausgebildet. Dabei dient die Plattform als Leitwerk des Gleitkörpers, und als ein Teil des Tragwerks mit kleiner Streckung und mit großer Tiefe. Die untere Oberfläche der Plattform wird mit positiv eingestelltem Anstellwinkel ausgebildet. Als Ergebnis wird der größte Teil der Auftriebskraft bei der Bewegung mit Bodeneffekt und im Freiflug erzeugt. Das Plattformprofil wird in der Seitenansicht mit einer aerodynamischen Formgebung ausgebildet. Dafür wird der Rumpf im oberen Vorderteil der Plattform angeordnet. Das Antriebs- und Drucksystem wird mit einer Verkleidung abgedeckt und im Hinterteil der Plattform angeordnet. Somit wird bei der Funktion des Einlaufs eine zusätzliche Zug- und Auftriebskraft durch eine starke Absaugung der Luftströmungsgrenzschicht von der oberen Profilfläche erzeugt. Innerhalb der Plattform wird ein Gasluftweg mit Kanälen ausgebildet. In den Kanälen werden Strömungsprofile mit einem positiven Anstellwinkel zum Geschwindigkeitsvektor der Anlaufströmung des Arbeitsmittels aufgestellt. Diese Profile lenken gleichzeitig die Arbeitsmittelströmung ab, damit das Arbeitsmittel stoßfrei in die Düsen der Strahlschürze eintritt. Somit wird eine Auftriebskraft erzeugt, deren Wert numerisch größer als das Flugzeuggewicht sein kann. Dadurch wird ein senkrechter Start des Flugzeugs auf eine zulässige Höhe sichergestellt. Bei geschlossenen Klappen der Ansatzrohre wird das Arbeitsmittel in den Düsen der Strahlschürze bis zu solchen Geschwindigkeiten beschleunigt, welche den festen Kernbereich mit einer Länge von 7 - 8 Düsenquerschnittkalibern ausbilden. Dadurch wird ein zuverlässiges Einhalten des Überdrucks in den Druckpolsterzellen in der Höhe von 7 - 8 Düsenquerschnittkalibern sichergestellt. Es werden dabei die Strahlen unter einem Winkel zur Stützfläche ausgeblasen. Dadurch wird eine ununterbrochene Förderung des Arbeitsmittels in die Zellen des Luftkissens sichergestellt. Bei der Einstellung der Klappen in eine Zwischenstellung werden die Auffüllung des statischen Luftkissens _beim Aufstieg des Flugzeugs auf die erforderliche Höhe, seine Manövrierung und seine Beschleunigung sichergestellt. Bei der Erhöhung der Vorwärtsgeschwindigkeit werden Auftriebskräfte erzeugt, welche Differenzdruckkräfte infolge einer Luftverdichtung zwischen der Stützfläche und der unteren Plattformfläche sind. Mit der Zunahme der Reisegeschwindigkeit wird ein Arbeitsmitteldurchsatz in den Luftkissen mittels der Klappen verringert. Gleichzeitig wird der Verbrauch des Arbeitsmittels für den Horizontalschub erhöht. Der Optimalzustand wird beim Abschalten des statischen Luftkissens erzeugt. Der Flug wird anhand von gasdynamischen Höhenrudern und Seitenrudern gesteuert. Dabei erfüllen die Höhenruder zwei Funktionen: Die Trimmung und die Steuerung des Apparats im Raum sowohl im "Schwebezustand" als auch innerhalb des gesamten Bereichs von Dauergeschwindigkeiten.

Das Flugzeug - Amphibienfahrzeug (Land- und Luftfahrzeug) enthält:
- 1: einen Rumpf,
- 2: einen Flugzeugtragflügel mit Endscheiben,
- 3: Klappen,
- 4: Höhen- und Seitenruder,
- 5: feste Seitenschürzen (die Skege) mit Eichdüsen,
- 6: ein komplettes Antriebs- und Drucksystem,
- 7: statische Luftkissenschläuche, die nach dem Dreibeinfahrwerk-Prinzip angeordnet sind und die mit Strahlschürzen versehen sind sowie
- 8: Hilfs- und Steuerungsmittel.

Dabei ist das Amphibienfahrzeug mit einer Plattform versehen. Die Plattform ist zusammen mit einem daran angebauten Tragflügel als ein zusammengesetzter Flügel ausgebildet. Die untere Fläche der Plattform weist einen positiv eingestellten Anstellwinkel auf. Das Plattformprofil in der Seitenansicht weist eine aerodynamische Formgebung auf, die einem Dreieck ähnlich aussieht. Dabei ist der Rumpf mit aerodynamischer Linienführung im vorderen Teil der Plattform angeordnet. Das komplette Antriebs- und Drucksystem ist mit einer Verkleidung abgedeckt und befindet sich im oberen Teil des Plattformhecks. Die Kanäle des Gas- und Luftwegs liegen innerhalb der Plattform und zwar so, dass das Arbeitsmittel über diese Kanäle an das Düsensystem der Strahlschürze und der Luftkissenauffüllung befördert werden kann. In den Kanälen sind zusätzlich aerodynamische Tragflächenprofile eingebaut. Die Ansatzrohre mit Gasverteilungsklappen sind im Plattformprofil angeordnet. Am Austritt aus den Ansatzrohren sind zwei Stufen von Seiten- und Höhenrudern angeordnet. Feste Längsseitenschürzen sind an den Rändern und in der Mitte des Plattformbodens angeordnet. Innerhalb der festen Seitenschürze sind Düsen zur Strahlabschirmung der Schürze angebracht. Im unteren Teil jeder Seitenschürze (des Skegs) gibt es aufblasbare Ballonette mit der Möglichkeit einer gleichmäßigen Lastverteilung unter den Seitenschürzen beim Abstellen auf einer unebenen Oberfläche.

Die Mängel des bekannten Verfahrens zur Erzeugung des Krafthaushalts des Flugzeugs sowie der Konstruktion des Flugzeugs - des Land- und Luftamphibienfahrzeugs -, welches nach diesem Verfahren ausgeführt ist, sind Folgende:
- das Luftkissen wirkt nur auf die Plattform ein. Dabei hat die Plattform eine relativ geringe Fläche, deswegen ist die Auftriebskraft U₁ = PS gering;
- die Auftriebskraft "U₂" ist gering, weil sie für die Ausführung des Verfahrens sehr hohe Kennwerte des Gasluftarbeitsmittels voraussetzt;
- die Auftriebskraft "U₃" wird mittels Beblasung der Profile in den Kanälen des Gas- und Luftwegs erzeugt; diese Kraft wird viel geringer als die angemeldete Kraft sein, weil das Arbeitsmittel, welches über die Kanäle fließt, eine Turbulenzstruktur aufweisen wird. Die angeführten Berechnungen setzen eine Laminarströmung voraus;
- das komplette Antriebs- und Drucksystem (ADS) ist sperrig und schwer;
- hohe Anforderungen an das Gasluftarbeitsmittel;
- großer Verbrauch des Gasluftarbeitsmittels von 160 kg/s;
- erhöhtes Leistung-zu-Gewicht-Verhältnis und erhöhter Brennstoffverbrauch;
- großes Eigengewicht;
- geringe Tragfläche;
- geringe Luftkissenfläche;
- die klappbaren Außenflächen erfüllen nicht die Funktionen eines Heckleitwerks;
- Steuerlosigkeit und hohe Gefahrenstufe bei Motorausfall.

Es ist Aufgabe der Erfindung, die genannten Mängel zu beseitigen und ein Mehrzweckluftverkehrsmittel zu entwickeln, welches viel wirtschaftlicher, viel zuverlässiger bei seinem Betrieb und konstruktionsmäßig viel einfacher ist und welches bessere Lenkbarkeit aufweist.

Die gestellte Aufgabe wird durch ein Verfahren zur Erzeugung des Kräftesystems eines Mehrzweckluftverkehrsmittels nach Anspruch 1 und durch ein Mehrzweckluftverkehrsmittel zur Durchführung des Verfahrens gelöst.

Das Verfahren zur Erzeugung des Kräftesystems eines Mehrzweckluftverkehrsmittels umfasst die Erzeugung von Auftriebs-, Zug- und Steuerkräften unter Einsatz der Energie des Antriebs-Drucksystems. Das Antriebs-Drucksystem erzeugt ein Luftarbeitsmittel, welches innerhalb des Luftweges gebildet wird. Der Luftweg enthält ein Kanal- und Klappensystem zur Regelung des Arbeitsmittelstroms. Das Profil des Arbeitsmittels wird nach einer aerodynamischen Formgebung ausgebildet. Das komplette Antriebs- und Drucksystem wird im hinteren Teil des Rumpfkörpers angeordnet. Innerhalb des Rumpfkörpers wird ein Luftweg mit Kanälen ausgebildet. Dabei hat das Mehrzweckluftverkehrsmittel eine Nurflügelflugzeug-Anordnung. Der Körper des Verkehrsmittels weist in der Draufsicht im Grundriss eine runde Form bzw. eine Dreieck- oder Vieleckform auf. Im mittleren Teil des Körpers wird ein Rumpf angeordnet, der nahtlos in Flügel übergeht. Die Oberfläche der Flügel bzw. ein Teil davon ist mit Hilfe von aerodynamischen Profilen ausgebildet, welche beweglich eingebaut sind, und zwar so, dass sie geöffnet oder geschlossen werden können. Das ist erforderlich, um die Fläche von dabei in den Flügeln gebildeten Lufteinlassspalten, einem Anstellwinkel des Luftstroms und eine erzeugte Auftriebskraft zu verändern. Unter den genannten aerodynamischen Profilen sind innerhalb der Flügel Ansaugluftwege mit einem Klappensystem ausgeführt. Das komplette Antriebs- und Drucksystem enthält im Rumpf eine Gruppe von Lüftern von mindestens zwei Bautypen. Die Lüfter liegen innerhalb des Körpers des Verkehrsmittels, ohne über seine Außenmaße hinauszugehen. Die Luft ist von diesen Lüftern über getrennte Luftwege zu zwei Arten von Düsen am Rumpfende weiterleitbar. Diese Düsen sind als Hauptlaufdüse beweglich in das Rumpfende eingebaut und bekommen die Luft aus dem Luftverteilungsabteil von den Lüftern über das Klappensystem. Die Neigung und die Drehung dieser Laufdüsen ist veränderbar, um damit die Zug- und Steuerkräfte zu erzeugen, die zur Erhöhung und zur Verminderung der Geschwindigkeit, zur Änderung des Angriffswinkels und zur Ausführung von Rollbewegungen und Wendungen erforderlich sind. Die im Flug auf das Mehrzweckflugverkehrsmittel einwirkenden Vertikalkräfte sind somit stabilisiert. In die gleichmäßig angehobene untere Fläche der Rumpfnase sind drei Reihen von Düsen eingebaut, von denen eine Düse einen Längsstrahl aus der Austrittskraft bildet, der schräg zur Erdoberfläche von der Peripherie zum Mittelpunkt des Mehrzweckflugverkehrsmittels gerichtet ist und das gebildete Luftkissen auffüllt. Andere als bewegliche Kombinationsdüsen ausgebildete Düsen verändern den seitlichen und den Längsneigungswinkel der Luftstrahlen und bilden zusammen mit dem Längsstrahl der ersten Düse eine dichte Luftschürze, die das Luftkissen zusätzlich auffüllt und eine zusätzliche Antriebskraft erzeugt.

Weitere vorteilhafte Ausgestaltungen des Verfahrens sind den Unteransprüchen entnehmbar.

So kann vorgesehen sein, dass die Luft vom ersten Lüfter mit einem Druck im Bereich von 0,05 bis 0,5 atm und die Luft vom zweiten Lüfter mit einem Druck im Bereich von 0,1 bis 3 atm in getrennten Luftwegen zu den zwei Arten von Düsen hin fließt und dass die untere Oberfläche des Mehrzweckluftverkehrsmittels in mehrere Teile aufgeteilt ist, um einige Luftkissen zu bilden, die ein unkontrollierbares Überströmen der Luft unter die gesamte Tragfläche verhindern und somit die Kipp- und laterale Stabilität erhöhen.

Eine weitere Ausgestaltung sieht vor, dass die Düse an der Unterseite des Mehrzweckflugverkehrsmittels, die die Luft mit dem niedrigeren Kennwert durchlässt, einen diskontinuierlichen Spalt mit einer Breite von 1 cm bis 10 cm bildet und dass die zweite Düse als Kombinationsdüse einen diskontinuierlichen Längsspalt mit einer Breite von 1 cm bis 10 cm bildet und damit beweglich eingebaute separate Düsen aufweist, die mindestens einteilig angeordnet und kreisförmig oder oval ausgebildet sind.

Die Komponenten der Antriebskräfte werden dadurch gebildet, dass eine Gruppe von Lüftern durch einen Motor angetrieben ist, dass durch die Spalte der etwas geöffneten Profile in der Oberfläche der Flügel Außenluft über den Ansaugweg zu den Lüftern weiter leitbar ist, dass dabei der Luftdruck an der Flügeloberseite abnimmt und eine erste Komponente einer Antriebskraft (U₁) erzeugbar ist, dass am Eintritt in den Saugteil des Ansaugwegs die etwas geöffneten Profile laminar umströmt sind und dass damit an jedem Profil eine zusätzliche Komponente einer Auftriebskraft (U₂) erzeugt ist.

Die Luft für die Luftkissen wird dadurch abgeleitet, dass nach der Erzeugung der beiden Komponenten der Auftriebskräfte (U₁, U₂) die Luft zu den Lüftern gelangt, dass die Luft mit einem Druck P₁ von 0,05 b bis 0,5 atm vom Lüfter und mit einem Druck von P₁ von 0,1 bis 3 atm vom Lüfter in den Luftverteilungsraum pressbar ist und dass danach die Luft über das Klappensystem in den Druckweg des Luftkissens gelangt.

Für ein Schweben und einen senkrechten Start bzw. eine senkrechte Landung des Mehrzweckflugverkehrsmittels ist zweckmäßig vorgesehen, dass die Luft mit einem Druck P₂ von den Lüftern über eine Hochdruckleitung zu beweglichen Kreisdüsen gefördert ist, die in den Kombinationsdüsen eingebaut sind, dass die Kombinationsdüsen einen Luftstrom bilden, der unter einem Winkel von 30° bis 90° zur Erdoberfläche von der Peripherie zum Mittelpunkt des Mehrzweckluftverkehrsmittels ausgerichtet ist, dass dabei durch die Luft, welche an den Kreisdüsen ausströmt und eine höhere Druckenergie aufweist, eine "Verstärkungsrolle" gebildet ist, dass diese Luft die Luft mit dem niedrigeren Kennwert aus der Längsdüse mitreißt und eine dichte Luftschürze bildet, dass dadurch das Luftkissen ausfüllbar ist, dass durch die Kombinationsdüse die untere Fläche des Körpers (Rumpfs) und des erzeugten Luftkissens in drei Teile aufgeteilt ist, dass damit ein zuverlässiges Halten des Luftkissens sichergestellt und die Längs- und Querstabilität des Mehrzweckluftverkehrsmittels erhöht ist und dass durch den Luftdruck auf die untere Fläche der Flügel und des Rumpfs eine weitere Komponente der Antriebskraft (U₃) erzeugt ist.

Weiterhin ist nach der Erfindung vorgesehen, dass im Zustand des Horizontalvorwärtsflugs bei positiven Angriffswinkeln bei einem Nurflügelflugzeug zusätzlich eine kondentionelle Komponente der Auftriebskraft (U₄) erzeugt ist, dass bei geschlossenen Profilen der Luftwiderstand unter Erhöhung der Fluggeschwindigkeit abgebaut ist und dass dabei die Luft über zusätzliche aufklappbare Lufteintritte im hinteren Teil des Rumpfs und der Flügel zu den Düsen am hinteren Teil des Mehrzweckflugverkehrsmittels leitbar ist.

Das Abstellen des Mehrzweckflugverkehrsmittels auf unebener Oberfläche wird dadurch sichergestellt, dass der untere Teil des Rumpfs mit ausfahrbaren Stützen versehen ist.

Das zur Durchführung des Verfahrens verwendete Mehrzweckluftverkehrsmittel schließt einen Körper, einen Rumpf, einen Flugzeugtragflügel, Höhen- und Seitenruder, ein komplettes Antriebs- und Drucksystem sowie Hilfs- und Steuerungsmittel ein. Dabei weist der Körper eine Nurflügelflugzeug-Anordnung auf. Der Rumpf mit seinem aerodynamischen Profil ist im mittleren Teil des Körpers angeordnet und geht nahtlos in die Flügel über. Die Oberfläche der Flügel bzw. ein Teil davon ist mit Hilfe von aerodynamischen Profilen ausgebildet, welche beweglich eingebaut sind, und zwar so, dass sie auf- und zugemacht werden können. Das ist erforderlich, um die Fläche der dabei in den Flügeln gebildeten Lufteinlassspalte, den Anstellwinkel des Luftstroms und die erzeugte Auftriebskraft zu verändern. Das komplette Antriebs- und Drucksystem ist innerhalb des Körpers angeordnet und geht über seine Konturen nicht hinaus. Die Kanäle des Luftwegs sind innerhalb des Körpers angeordnet. Der eigentliche Luftweg besteht aus zwei Teilen: einem Ansaug- und einem Druckteil. Dabei schließt der Ansaugteil Ansaugluftwege mit einem Klappensystem ein. Diese Ansaugluftwege befinden sich innerhalb der Flügel unter den genannten aerodynamischen Profilen. Das komplette Antriebs- und Drucksystem enthält eine Gruppe von Lüftern von mindestens zwei Bautypen. Die Lüfter liegen innerhalb des Körpers des Verkehrsmittels, ohne über seine Außenmaße hinauszugehen. Dabei fließt die Luft vom ersten Lüfter mit einem Druck im Bereich von 0,05 bis 0,5 atm und die Luft vom zweiten Lüfter mit einem Druck von 0,1 bis 3 atm über getrennte Druckwege zu zwei Arten von Düsen hin. Die Düsen befinden sich umlaufend oder teilweise am Umfang der unteren Fläche des Körpers des Verkehrsmittels. Dabei stellt die erste Düse einen diskontinuierlichen Spalt dar und lässt die Luft mit niedrigeren Druckkennwerten durch. Die zweite Düse ist eine Kombinationsdüse und stellt einen diskontinuierlichen Längsspalt mit den darin beweglich eingebauten separaten Kreisdüsen dar, die ihren seitlichen und den Längsneigungswinkel ändern können. Dabei ist die untere Oberfläche des Verkehrsmittels durch die Kombinationsdüsen in mehrere Teile aufgeteilt, um einige Luftkissen zu bilden. Im hinteren Teil des Mehrzweckluftverkehrsmittels sind eine Hauptdüse und Hilfs-Laufdüsen beweglich eingebaut. Die Luft wird aus dem Luftverteilungsabteil von der Lüftergruppe über einen Austrittsluftweg mit Hilfe eines Klappensystems zu diesen Düsen weitergeleitet. Um die auf das Flugzeug im Flug einwirkenden Vertikalkräfte zu stabilisieren, ist die Flosse mit drei Höhenrudern ausgeführt. Die Außenruder können als Querruder eingesetzt werden. Die Kursstabilität wird durch zwei Kielflossen mit Seitenrudern sichergestellt.

Die Erfindung wird anhand eines in den Zeichnungen dargestellten Ausführungsbeispiels näher erläutert. Es zeigen:
- Fig. 1: die Gesamtansicht des vorgeschlagenen Verkehrsmittels,
- Fig. 2: die Draufsicht auf das Verkehrsmittel,
- Fig. 3: die Seitenansicht des Verkehrsmittels,
- Fig. 4: den Längsschnitt entlang der Linie A - A aus Fig. 2,
- Fig. 5: die Vorderansicht des Verkehrsmittels,
- Fig. 6: die Rückansicht des Verkehrsmittels,
- Fig. 7: die Unteransicht des Verkehrsmittels,
- Fig. 8: ein vergrößertes Detail aus Fig. 7,
- Fig. 9: einen kombinierten Düsenplan,
- Fig. 10: das Übersichtsschema des Ansaugluftwegs,
- Fig. 11: das Übersichtsschema des Austrittluftwegs,

- Fig.12: das Übersichtsschema des Flügels mit geschlossenen aerodynamischen Profilen,
- Fig. 13: das Schema zur Erzeugung von zwei Teilen der Auftriebskraft und
- Fig. 14: das Schema der Ausbildung einiger Luftkissen.

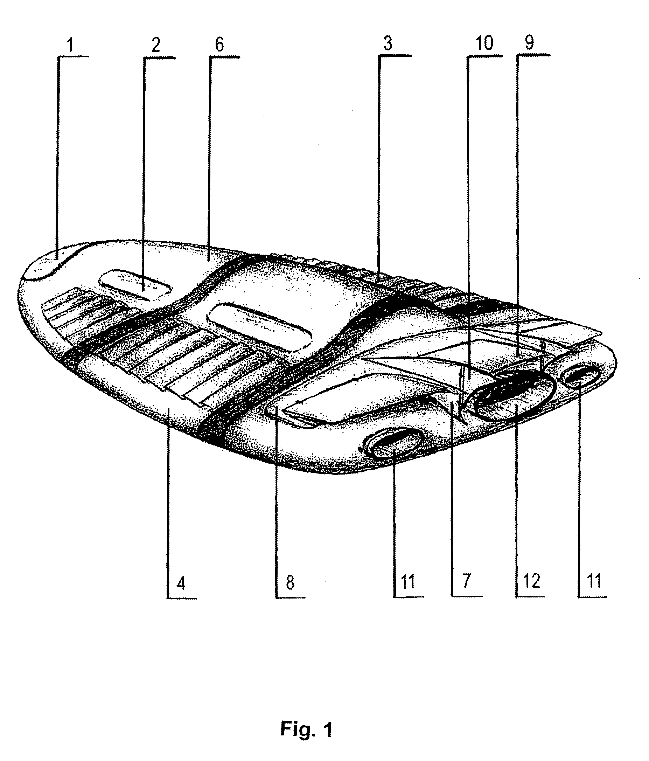

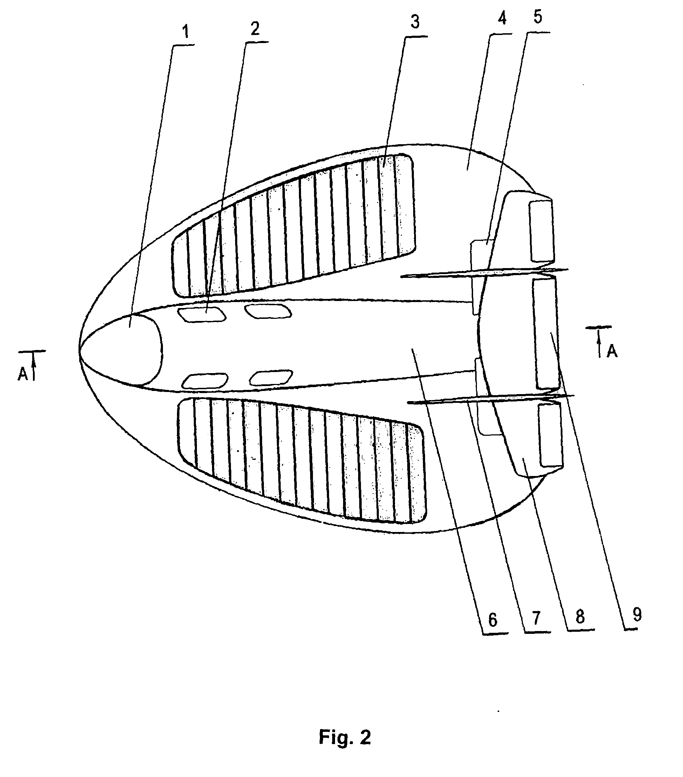

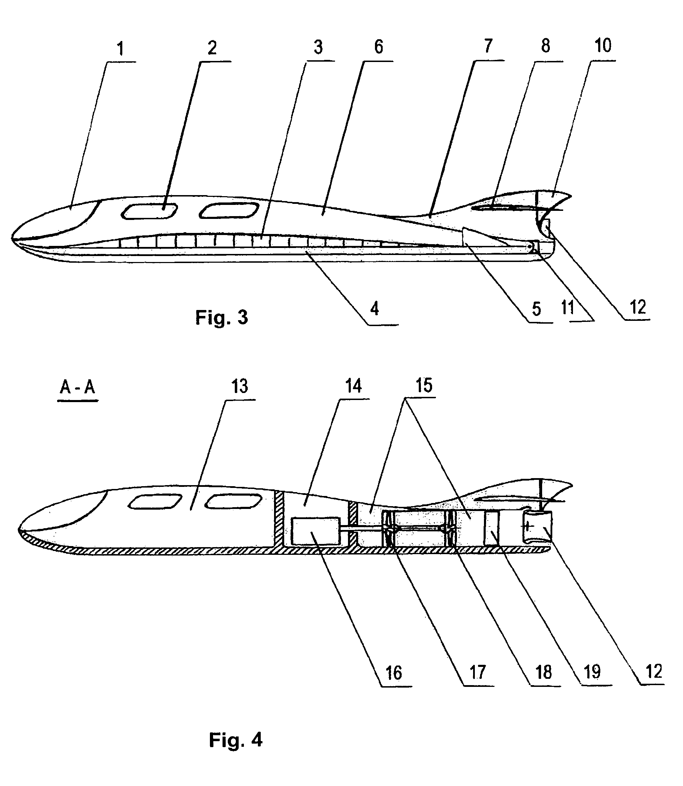

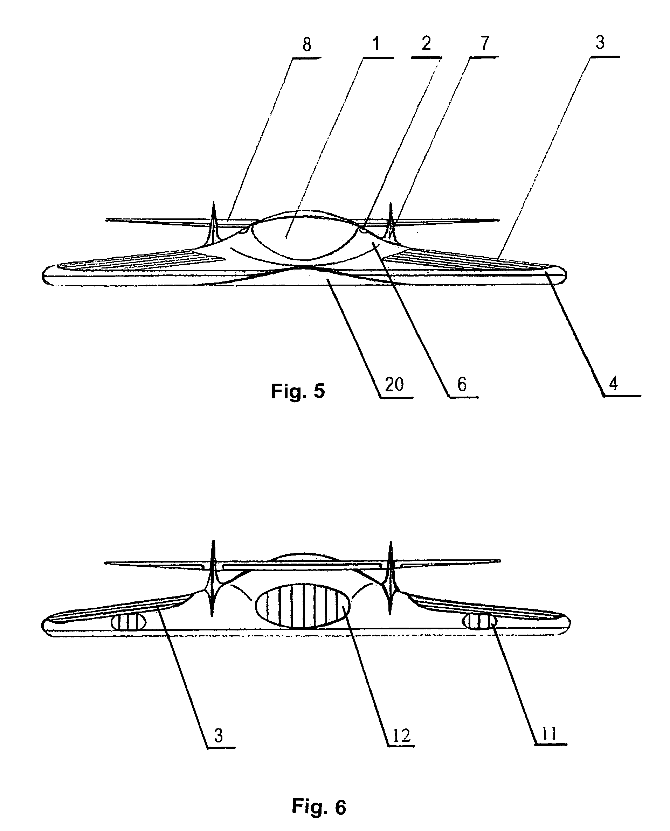

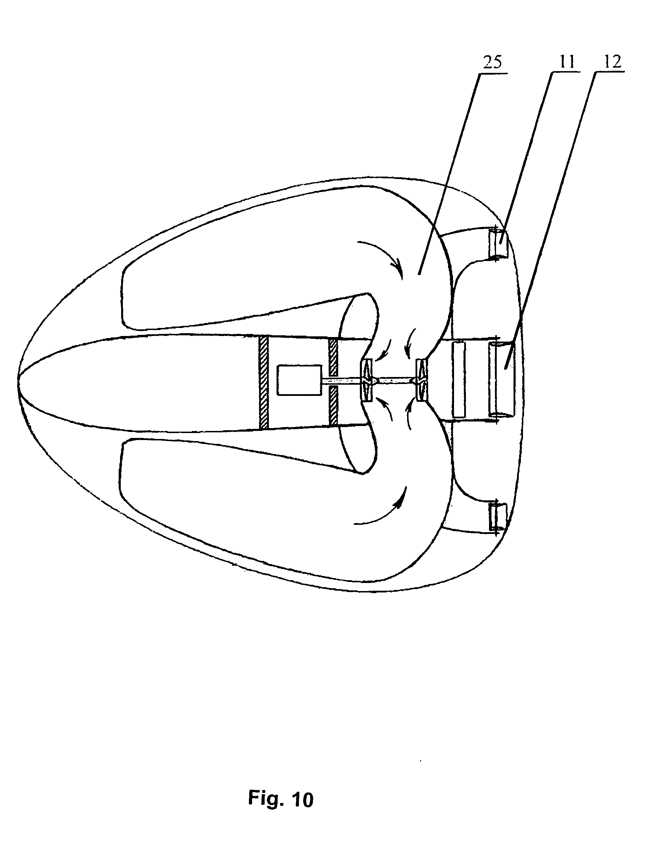

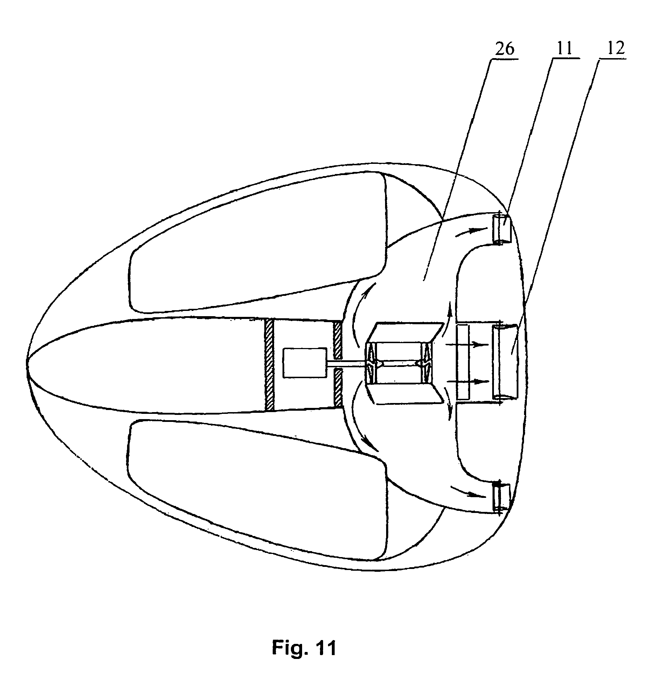

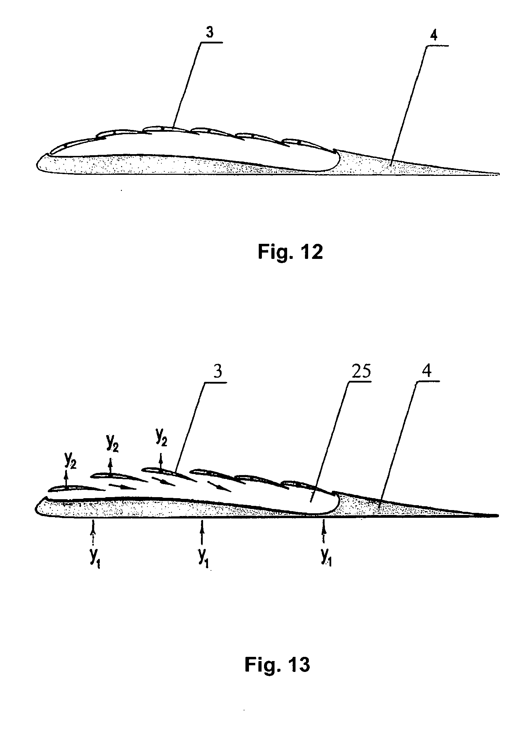

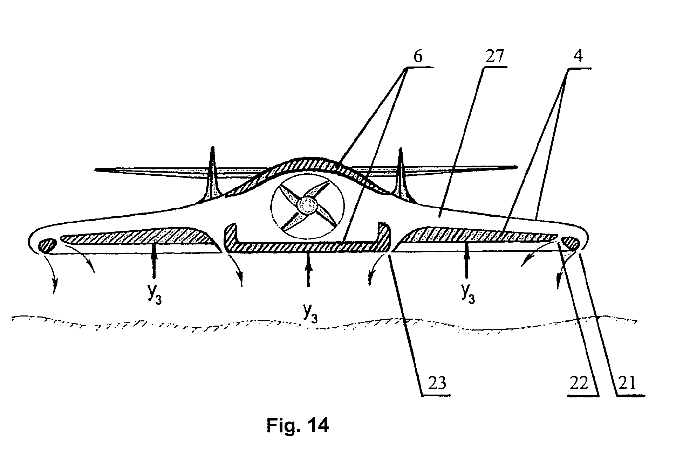

Das Mehrzweckluftverkehrsmittel (Fig. 1) hat eine Nurflügelflugzeug-Anordnung. Das ermöglicht es, eine robuste und leichte Volumenkonstruktion mit einer Menge von Funktionskanälen und Abteilen zu entwickeln. Diese Kanäle und Abteile fungieren gleichzeitig als Leistungselemente, die die Gesamtsteifigkeit verstärken. Auf dem Plan in Draufsicht (Fig. 2) hat der Körper eine oval-dreieckige Form. Der Körper kann auch kreisförmig oder vieleckig ausgeführt werden. Die Flügel 4 haben ein aerodynamisches Profil. In der Mitte des Mehrzweckluftverkehrsmittels tritt der Rumpf 6 nahtlos hervor. Der Rumpf 6 weist auch ein aerodynamisches Profil auf. Im Vorderteil des Körpers befindet sich die Führerraumhaube 1. Die Seitenfenster 2 für Fluggäste liegen zu Seiten des Körpers. Im hinteren Teil sind zwei Kiele 7 mit Höhenflossen 8 angeordnet. An der Höhenflosse 8 sind drei Höhenruder 9 angeordnet. Die Außenruder können als Querruder verwendet werden. Der Kiel 7 ist mit Seitenrudern 10 (Fig. 3) versehen. Im hinteren Teil des Körpers ist eine Hauptlaufdüse 12 (Fig. 6) angeordnet. Im hinteren Teil der Flügel 4 gibt es zusätzliche Düsen 11. Die Hauptlaufdüse 12 und die zusätzlichen Düsen 11 sind in der senkrechten und in der waagerechten Ebene drehbar (auf und ab, rechts und links). An der Saugfläche der Flügel 4 sind Platten 3 mit aerodynamischem Profil beweglich angeordnet (Fig. 12). Diese Platten 3 geben die Form der Saugfläche der Flügel 4 wieder. Sie können sowohl gruppenweise als auch separat öffnen und schließen. Dabei wird die Fläche des gebildeten Lufteinlassspaltes geändert. Der Ansaugluftweg 25 verläuft unter den Platten 3 innerhalb des Flügels 4 (Fig. 13). Innerhalb des Rumpfs 6 befinden sich ein Raum 13 (Fig. 4) für den Flieger und die Fluggäste (bzw. für die Fracht), ein Motorraum 14 mit einem Motor 16 und ein Luftverteilungsraum 15. Diese Räume sind voneinander getrennt. Im Luftverteilungsraum 15 ist eine Lüftergruppe mit zwei Typen von Lüftern 17, 18 installiert. Die Lüfter des ersten Typs 18 bauen einen Luftdruck P₁ im Bereich von 0,05 bis 0,5 atm auf. Die Lüfter des zweiten Typs 17 erzeugen einen Druck P₂ im Bereich von 0,1 bis 3 atm. Die Lüfter 17 und 18 sind innerhalb des Rumpfs 6 des Mehrzweckluftverkehrsmittels ausgeführt und gehen über seine Grenzen nicht hinaus. Der Luftverteilungsraum 15 ist mittels eines Klappensystems 19 (Fig. 4) mit den Ansaugluftwegen 25 (Fig. 10) und den Druckluftwegen 26 (Fig. 11), 27 (Fig. 14) verbunden.

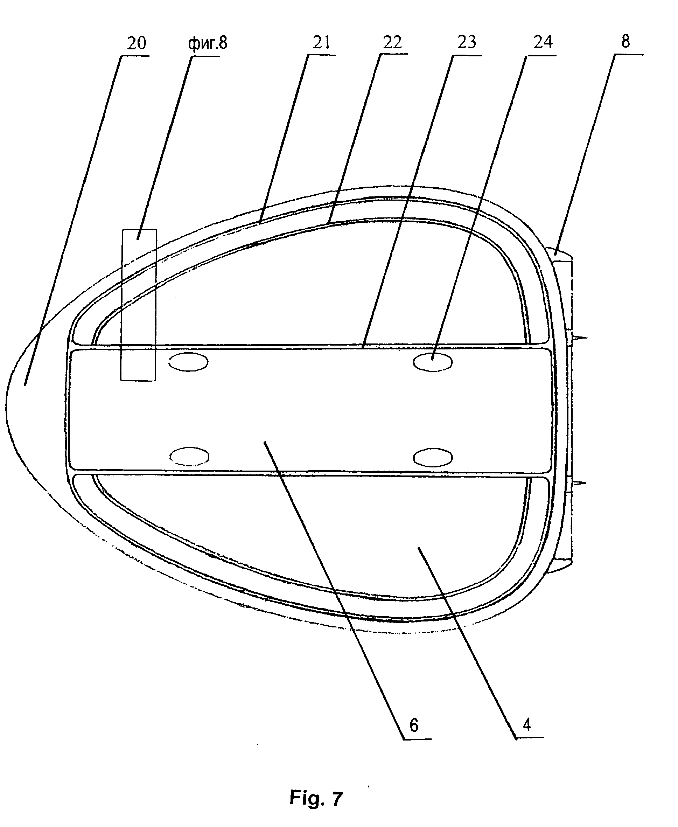

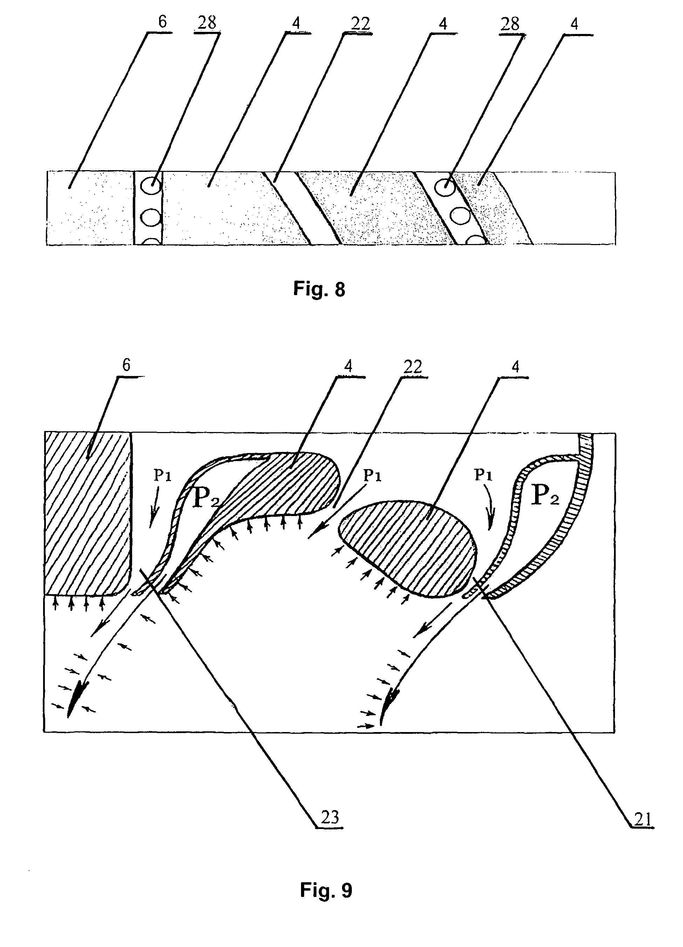

Eine untere Fläche 20 der Rumpfnase (Fig. 5) ist gleichmäßig etwas nach oben angehoben. Am Anfang dieser Krümmung sind drei Reihen von Düsen 21, 22 und 23 umlaufend auf der unteren Körperoberfläche 20 eingebaut (Fig. 7). Die einfache Düse 22 stellt einen diskontinuierlichen Spalt mit einer Breite von 1 bis 10 cm dar. Dieser Spalt wird mit dem niedrigeren Druck P₁ beaufschlagt (Fig. 9). Die Kombinationsdüse 21, 23 stellt einen diskontinuierlichen Längsspalt mit darin beweglich eingebauten getrennten Kreisdüsen 28 dar. Der Kreisdüsendurchmesser beträgt 1 bis 5 cm. Der Düsenabstand beträgt 3 Düsendurchmesser. Die Luft wird zur Kombinationsdüse 23 über zwei Druckwege mit zwei Druckkennwerten gefördert. Dabei wird die Luft mit niedrigerem Druck P₁ zum Längsspalt 22 und die Luft mit höherem Druck P₂ zu den beweglichen Kreisdüsen 28 (Fig. 8) gefördert. Die Kreisdüsen 28 können ihren seitlichen und Längsneigungswinkel ändern. Die untere Fläche 20 des Körpers ist durch die Kombinationsdüsen 23 (Fig. 7) in drei Teile aufgeteilt. Im unteren Teil des Rumpfs 6 gibt es ausfahrbare Stützflächen 24. Sie dienen zur Sicherung der waagerechten Stellung des Mehrzweckluftverkehrsmittels beim Abstellen auf einer unebenen Oberfläche.

### Die Funktionsweise des Mehrzweckluftverkehrsmittels ist wie folgt:

Der Motor 16 (Fig. 4) treibt die Lüftergruppe 17, 18 an. Die Außenluft strömt durch die Spalte, welche durch die etwas geöffneten aerodynamischen Profile 3 (Fig. 13) auf der Oberfläche der Flügel 4 gebildet worden sind, über den Ansaugluftweg 25 zu den Lüftern 17 und 18 hin. Dabei fällt der Luftdruck an der Flügeloberfläche ab. Somit wird eine erste Komponente einer Auftriebskraft U₁ erzeugt. Am Eintritt in den Saugteil des Luftwegs 25 des Flügels 4 umströmt die Außenluft die etwas geöffneten Strömungsprofile 3 laminar. Jedes der Profile 3 erzeugt eine zusätzliche Auftriebskraft U₂. Ihre Summe wird die zweite Komponente der Auftriebskraft des Mehrzweckluftverkehrsmittels ausmachen. Nachdem die Arbeit zur Erzeugung von zwei Komponenten der Auftriebskraft geleistet ist, kommt die Luft zu den Lüftern 17, 18 hin. Die Lüfter 18 des ersten Typs pressen die Luft bis zum Druck P₁ von 0,05 bis 0,5 atm. Die Lüfter 17 des zweiten Typs pressen die Luft bis zum Druck P₂ von 0,1 bis 3 atm. Die Luft mit P₁ vom ersten Lüftertyp kommt in den Luftverteilungsraum 15. Von da aus strömt die Luft über das Steuerklappensystem 19 (Fig. 4) in den Druckweg des Luftkissens 31 (Fig. 14). Weiter strömt die Luft über die Düsen 21, 22 und 23 unter die Flügel und den Rumpf des Verkehrsmittels. Die Luft mit dem Druck P₂ wird von den Lüftern 17 des zweiten Typs über eine Hochdruckleitung (in den Zeichnungen nicht abgebildet) zu beweglichen Kreisdüsen gefördert, die in den Kombinationsdüsen 23, 21 (Fig. 9) eingebaut sind. Die Kombinationsdüse bildet und richtet die Luftströme unter einem Winkel von 30° bis 90° zur Erdoberfläche von der Peripherie zum Mittelpunkt des Luftverkehrsmittels aus. Dabei spielt die Luft, welche aus den Kreisdüsen 28 ausströmt und eine höhere Druckenergie aufweist, eine "Verstärkungsrolle". Diese Luft reißt die Luft mit niedrigeren Druckkennwerten aus der Längsdüse 21, 23 mit sich und bildet zusammen mit dieser Luft eine dichte Luftschürze aus. Zusätzlich füllt sie das Luftkissen aus. Die Kombinationsdüsen 23 (Fig. 14) teilen die untere Fläche des Körpers in drei Teile auf. Deswegen besteht auch das durch alle Düsen erzeugte Luftkissen aus drei Teilen. Das stellt ein zuverlässigeres Halten des Luftkissens sicher und erhöht die Längs- und die Querstabilität des Mehrzweckluftverkehrsmittels. Der Luftdruck auf die Unterfläche 20 der Flügel 4 und des Rumpfs 6 erzeugt eine Auftriebskraft U₃. Die Zusammenwirkung der Kräfte U₁, U₂ und U₃ ermöglicht es, bis auf eine vorgegebene Höhe wie ein Hubschrauber zu steigen. Die Flughöhe wird durch folgende Hauptkenndaten geregelt: Motorleistung, Tragfläche des Verkehrsmittels und Luftdichte. Im Zustand des Horizontalvorwärtsflugs entsteht bei positiven Angriffswinkeln beim Nurflügelflugzeug zusätzlich eine konventionelle Auftriebkraft U₄. Um den Luftwiderstand unter Erhöhung der Fluggeschwindigkeit abzubauen, können sich die Strömungsprofile 3 schließen. Dann wird Luft über zusätzliche aufklappbare Lufteintritte 5 (Fig. 3) im hinteren Teil des Rumpfs und der Flügel 4 zu den Lüftern hinströmen. Die Manöver in Erdnähe und in begrenztem Raum werden mittels einer Änderung des Neigungswinkels der steuerbaren Kreisdüsen 28 (Fig. 8) ausgeführt. Das verursacht eine Umverteilung der Luftströme und eine Druckänderung in verschiedenen Teilen des Luftkissens und ermöglicht es dem Verkehrsmittel, in die erforderliche Richtung zu wenden und sich zu bewegen. Um eine fortschreitende Geschwindigkeitsbewegung sicherzustellen, wird die Luft mit dem Druck P₁ in einen Austrittsluftweg 26 (Fig. 11) gefördert und mittels eines Klappensystems in die dafür erforderlichen Laufdüsen 11, 12 verteilt. Die Dreiachsensteuerung des Verkehrsmittels je nach Angriffswinkel, Neigungen und Kursrichtung kann mit Hilfe von Höhenrudern und Querrudern 9, Laufdüsen 11, 12, aerodynamischen Profilen 3 auf der Saugfläche der Flügel 4, Seitenrudern 10 und steuerbaren Düsen 28 mit einem Druck P₂ erfolgen.

Das Verfahren zur Erzeugung des Krafthaushalts des Mehrzweckluftverkehrsmittels wird auf folgende Weise ausgeführt:

Das vorgeschlagene Verfahren zur Erzeugung des Krafthaushalts des Mehrzweckluftverkehrsmittels umfasst die Erzeugung von Auftriebs-, Zug- und Steuerkräften unter Einsatz der Energie eines Antriebs-Drucksystems, welches ein Gas-LuftArbeitsmittel entwickelt.

Das Verfahren ist **dadurch gekennzeichnet, dass** das Mehrzweckluftverkehrsmittel eine Nurflügelflugzeug-Anordnung aufweist. Das ermöglicht es, eine robuste und leichte Volumenkonstruktion mit einer Menge von Funktionswegen, -kanälen und Abteilen zu entwickeln. Diese Kanäle und Abteile fungieren gleichzeitig als Leistungselemente, die die Gesamtsteifigkeit verstärken. Auf dem Plan in Draufsicht weist das Verkehrsmittel eine Form auf, die von rund bis drei- oder vieleckig mit einer großen Tragfläche variiert. Die Flügel weisen aerodynamisches Profil auf. In der Mitte des Mehrzweckluftverkehrsmittels tritt der Körper (der Rumpf) gleichmäßig hervor, der ebenfalls ein aerodynamisches Profil hat. An der Saugfläche der Flügel sind Platten mit aerodynamischem Profil beweglich angeordnet, und zwar so, dass sie die Form der Saugfläche wiedergeben. Die Platten können sich sowohl gruppenweise als auch separat steuerbar öffnen und schließen, wobei die Fläche des dabei gebildeten Spalts geändert wird. Der Ansaugluftweg liegt unter den aerodynamischen Profilen innerhalb des Flügels. Die Außenluft wird von der Flügeloberfläche über die Spalte angesaugt, welche durch die etwas geöffneten speziell geformten aerodynamischen Profile gebildet werden. Über die Ansaugluftwege strömt die Luft zur Lüftergruppe hin. Dabei fällt der Luftdruck an der Flügeloberfläche ab. Somit wird eine erste Komponente der Auftriebskraft erzeugt. Am Eintritt in den Saugteil des Flügels umströmt die Außenluft die etwas geöffneten speziell geformten Strömungsprofile laminar. Jedes der Profile erzeugt eine zusätzliche Auftriebskraft. Die Summe dieser Kräfte macht eine zweite Komponente der Auftriebskraft aus. Nachdem die Arbeit im Zusammenhang mit der Erzeugung von zwei Komponenten der Auftriebskraft geleistet ist, gelangt die Luft zu den Lüftern hin.

Das Drucksystem setzt sich aus einem Motor, einer Transmission und einer Gruppe von Lüftern von zwei Typen zusammen. Die Lüfter pressen die Luft bis zu unterschiedlichen Druckkennwerten und richten sie in getrennte Druckwege, die zu den zwei Arten von Düsen führen. Die Düsen liegen umlaufend im unteren Teil des Verkehrsmittels. Eine Düse lässt die Luft mit niedrigeren Kennwerten durch und stellt einen diskontinuierlichen Spalt dar. Diese Düse bildet aus der Austrittsluft einen Längsstrahl aus, richtet ihn schräg zur Erdoberfläche von der Peripherie zum Mittelpunkt des Luftverkehrsmittels aus und füllt das unter dem Mehrzweckluftverkehrsmittel gebildete Luftkissen aus. Die zweite Düse ist eine Kombinationsdüse, welche einen diskontinuierlichen Längsspalt mit darin beweglich eingebauten separaten Kreisdüsen darstellt. Die Luft wird über zwei Druckwege mit zwei Druckkennwerten gefördert. Dabei wird die Luft mit dem niedrigeren Druck zum Längsspalt und die Luft mit dem höheren Druck zu den beweglichen Kreisdüsen gefördert. Die Kreisdüsen können ihren seitlichen und Längsneigungswinkel ändern. Die Kombinationsdüse bildet und richtet die Luftströme schräg zur Erdoberfläche von der Peripherie zum Mittelpunkt des Luftverkehrsmittels aus. Dabei spielt die Luft, welche aus den Kreisdüsen ausströmt und eine höhere Druckenergie aufweist, eine "Verstärkungsrolle". Diese Luft reißt die Luft mit niedrigeren Kennwerten aus der Längsdüse mit sich und bildet zusammen mit dieser Luft eine dichte Luftschürze aus. Zusätzlich füllt sie das Luftkissen aus. Der Luftdruck innerhalb des Luftkissens, multipliziert mit der Arbeitsfläche der unteren Fläche des Mehrzweckluftverkehrsmittels, macht eine dritte Komponente der Auftriebskraft aus. Mit der Erhöhung der Geschwindigkeit und der Menge des Zugwinds wird eine Summe von drei Auftriebskräften das Gewicht des Luftverkehrsmittels überschreiten. Dadurch wird ein senkrechter Start ermöglicht. Die untere Fläche des Verkehrsmittels wird durch die Kombinationsdüsen in mehrere Teile aufgeteilt, um einige Luftkissen auszubilden, um das unkontrollierte Überströmen der Luft unter der gesamten Tragfläche zu verhindern und somit die Kipp- und die laterale Stabilität zu erhöhen. Die Manöver in Erdnähe und in begrenztem Raum werden mittels einer Änderung der Bewegungsrichtung der "Verstärkungsstrahle" (Armierungsstrahle) mit Hilfe von steuerbaren Kreisdüsen durchgeführt. Das verursacht ein Überströmen der Luftströme, eine Verschiebung des Druckmittelpunkts des Luftkissens und eine Entstehung von Kräften, welche die Neigung, die Wendung sowie die Fortbewegung des Verkehrsmittels bedingen. Das teilweise Öffnen der speziell geformten aerodynamischen Profile an unterschiedlichen Abschnitten der Saugfläche der Flügel wird eine Erhöhung der Auftriebskraft an dieser Stelle sowie eine entsprechende Neigung des Verkehrsmittels hervorrufen. Im hinteren Teil des Mehrzweckluftverkehrsmittels sind die Hauptdüse und die Hilfs-Laufdüsen beweglich eingebaut. Die Luft wird aus dem Luftverteilungsabteil von der Lüftergruppe über einen Austrittsluftweg mit Hilfe eines Klappensystems zu diesen Düsen weitergeleitet. Diese Luft ändert die Neigung und die Drehung der Laufdüsen und verteilt die Menge der über die Düsen fließenden Luft mit Hilfe des Klappensystems. Dadurch werden Zug- und Steuerkräfte erzeugt. Diese Kräfte ermöglichen es dem Mehrzweckluftverkehrsmittel, die Geschwindigkeit zu erhöhen und zu vermindern, den Angriffswinkel zu ändern, Rollbewegungen und Wendungen auszuführen. Um die auf das Flugzeug im Flug einwirkenden Vertikalkräfte zu stabilisieren, ist die Konstruktion der Flosse mit drei Höhenrudern versehen. Die Außenruder können als Querruder eingesetzt werden. Die Kursstabilität wird durch zwei Kielflossen mit Seitenrudern sichergestellt.

Die vorgeschlagene Gruppe von Erfindungen ermöglicht es, ein Mehrzweckluftverkehrsmittel zu entwickeln, welches die nützlichen Eigenschaften eines Amphibienfahrzeugs, eines Luftkissenboots und eines Hubschraubers in sich vereinigt. Hohe aerodynamische Eigenschaften und das gebildete leistungsstarke Luftkissen ermöglichen es, das Verkehrsmittel bei Geländefahrten, im hohen Norden, in der Tundra, in versumpften und schwer passierbaren Gegenden einzusetzen.

Das Fehlen von festen Seitenschürzen und das Fehlen eines direkten Zugangs zu den Lüftern verbessert die Aerodynamik, schließt Unfälle für Personen und eine Zerstörung der Lüfter durch fremde Gegenstände aus.

Die wesentlichen Merkmale des neuen Mehrzweckflugverkehrsmittels sind:
1. Das Vorhandensein von Flügeln, die nahtlos am Rumpf des Mehrzweckflugverkehrsmittels angebracht sind, stellen einen Gleitflug wie bei einem gewöhnlichen Flugzeug sicher.
2. Mit den steuerbaren Profilen in den Flügeln werden Unterdruckzonen, die an der Oberfläche der Flügel gebildet sind, entlüftet.
3. Es erfolgt eine zwangsläufige Erzeugung von Hochdruckzonen (Luft- und Gasluftkissen) über die gesamte Oberfläche der Flügel.
4. Die Luft- und Gasstrahlen, die einen erhöhten Druck aufweisen, stellen ein Halten der Luft- und Gasluftkissen sowie eine Aufteilung dieser in mehrere Teile sicher.
5. Die Steuerung der Raumlage des Mehrzweckluftverkehrsmittels beim senkrechten Aufstieg und beim senkrechten Landen wird durch eine Unterteilung der Unterdruckzonen über die gesamte Oberfläche der Flügel sowie durch eine Umverteilung der Hochdruckzonen unter den Flügeln sichergestellt.

Der entscheidende Vorteil eines solchen Mehrzweckflugverkehrsmittels besteht darin, dass es die einem Hubschrauber adäquate Energie nur beim Aufstieg und bei der Landung verbraucht, während es bei einem horizontalen Flug bereits wie ein Flugzeug reagiert. Es kann sogar "bremsen", d. h. die Bewegungsgeschwindigkeit abbauen, wie ein Vogel, in dem es den Anstellwinkel der Profile akut erhöht. Dabei ist nicht zu befürchten, dass es ins Trudeln kommt. Das ist dadurch bedingt, dass es zum Unterschied zum Flugzeug die Aufstiegskraft ohne Fortbewegung erzeugen kann. Das Mehrzweckflugverkehrsmittel ist daher hauptsächlich für einen Betrieb mit geringen Geschwindigkeiten und in Erdnähe konzipiert.

## Patentansprüche

1. Verfahren zur Erzeugung des Kräftesystems für ein Mehrzweckluftverkehrsmittel, einschließlich der Erzeugung von Auftriebs-, Zug- und Steuerkräften unter Einsatz der Energie eines Antriebs-Drucksystems, welches innerhalb eines Luftwegs ein Luftarbeitsmittel bildet und der Luftweg ein Kanal- und Klappensystem zur Regelung des Arbeitsmittelstroms aufweist, wobei das Profil des Arbeitsmittels eine aerodynamische Form hat und das komplette Antriebs-Drucksystem im hinteren Teil des Rumpfkörpers angeordnet ist und wobei innerhalb des Rumpfkörpers ein Luftweg mit Kanälen ausgebildet ist,
**dadurch gekennzeichnet,**
**dass** das Mehrzweckluftverkehrsmittel als Nurflügelflugzeug ausgebildet ist und im Grundriss eine runde Form bzw. Dreieck- oder Vieleckform aufweist, die im mittleren Teil mit einem Rumpf (6) versehen ist,
**dass** der Rumpf (6) nahtlos in Flügel (4) übergeht, wobei die Oberfläche der Flügel (4) bzw. ein Teil davon als aerodynamisches Profil (3) ausgebildet ist,
**dass** diese Profile (3) beweglich in die Oberfläche der Flügel (4) eingebaut sind und zwar so, dass sie zu öffnen und zu schließen sind, um die Fläche der dabei in den Flügeln (4) gebildeten Lufteinlassspalte, den Anstellwinkel des Luftstroms und die erzeugte Antriebskraft zu verändern,
**dass** unter den Profilen (3) innerhalb der Flügel (4) Ansaugluftwege (25) mit einem Klappensystem (19) ausgebildet sind,
**dass** das komplette Antriebs- und Drucksystem aus einer Gruppe von Lüftern (17, 18) aus mindestens zwei Bautypen im Rumpf (6) eingebaut ist, ohne dessen Grenzen zu überschreiten,
**dass** die Luft von den zwei Lüftern (17, 18) über getrennte Luftwege zu zwei Arten von Düsen (11, 13) am Rumpfende weiter leitbar ist,
**dass** diese Düsen als Hauptlaufdüse (12) und als Hilfslaufdüsen (11) beweglich in das Rumpfende eingebaut sind und die Luft aus dem Luftverteilungsraum (15) von den Lüftern (17, 18) über das Klappensystem (19) bekommen,
**dass** damit die Neigung und die Drehung dieser Laufdüsen (11, 12) veränderbar ist, um **dadurch** die Zug- und Steuerkräfte zu erzeugen, die zur Erhöhung und zur Verminderung der Geschwindigkeit, zur Änderung des Angriffswinkels und zur Ausführung von Rollbewegungen und Wendungen erforderlich sind, um die auf das Mehrzweckflugverkehrsmittel im Flug einwirkenden Vertikalkräfte zu stabilisieren,
**dass** in die gleichmäßig angehobene untere Fläche (20) der Rumpfnase drei Reihen von Düsen (21, 22, 23) eingebaut sind, von denen eine Düse (22) einen Längsstrahl aus der Austrittsluft bildet, der schräg zur Erdoberfläche von der Peripherie zum Mittelpunkt des Mehrzweckluftverkehrsmittels gerichtet ist und das gebildete Luftkissen ausfüllt und
**dass** andere als bewegliche Kombinationsdüsen (23) ausgebildete Düsen den seitlichen und den Längsneigungswinkel der Luftstrahlen verändern und zusammen mit dem Längsstrahl der Düse (22) eine dichte Luftschürze bilden, die das Luftkissen zusätzlich auffüllt und eine zusätzliche Antriebskraft erzeugt.

2. Verfahren nach Anspruch 1,
**dadurch gekennzeichnet,**
**dass** das Mehrzweckluftverkehrsmittel eine Nurflügelflugzeug-Anordnung und eine Tragfläche aufweist, welche einen Horizontalvorwärtsflugzustand sicherstellt,
**dass** der Körper des Verkehrsmittels in Draufsicht im Grundriss eine runde, ovale bzw. eine Vieleckform aufweist und im mittleren Teil des Körpers ein Rumpf (6) angeordnet ist,
**dass** der Rumpf (6) nahtlos in die Flügel (4) übergeht und die Flügeloberfläche bzw. ein Teil davon mit Hilfe von einzelnen aerodynamischen Profilen (3) ausgebildet ist, welche beweglich in Form von Jalousien eingebaut sind, so dass sie in Gruppen an unterschiedlichen Abschnitten der Flügel (4) geöffnet und geschlossen werden können,
**dass** die Weite des teilweisen Öffnens von Profilen (3) die Menge der durchfließenden Luft, den Winkel, unter dem die Luft angesaugt wird und den Unterdruck auf der Oberfläche der Flügel (4) ändert,
**dass** unter den Profilen (3) innerhalb der Flügel (4) Ansaugluftwege (25) mit einem Klappensystem (19) ausgeführt sind,
**dass** sich das Antriebs- und Drucksystem innerhalb des Körpers des Verkehrsmittels befindet, eine Gruppe von Lüftern (17, 18) von mindestens zwei Bautypen enthält und die Außenluft über Ansaugluftwege (25) durch teilweise geöffnete Profile (3) oder durch zusätzliche aufklappbare Lufteinlassspalten (5) bekommt,
**dass** die Luft anhand von zwei Lüftern (17, 18) bis zu einem höheren und niedrigeren Druck gepresst wird und aus einem Luftverteilungsabteil (15) über die getrennten Druckwege zu den zwei Arten von Düsen (21, 22, 23), welche reihenweise an der unteren Fläche des Körpers des Verkehrsmittels angeordnet sind, und zu den Düsen (11, 12) im hinteren Teil des Körpers des Verkehrsmittels fließt,
**dass** die Düse (22) die Luft mit niedrigerem Druck benutzt und diese Luft zu einem Längsstrahl umformt, den Längsstrahl schräg zur Erdoberfläche von der Peripherie zum Mittelpunkt des Mehrzweckluftverkehrsmittels richtet und unter dem Mehrzweckluftverkehrsmittel ein Luftkissen ausbildet,
**dass** die Düsen (21, 23) als Kombinationsdüsen ausgeführt sind und die Luft mit höherem und niedrigerem Druck benutzen,
**dass** die Düsen (21, 23) sich umlaufend und längs des Körpers des Verkehrsmittels befinden, die Luft zu Längsstrahlen umformen und den seitlichen und den Längsneigungswinkel des Luftstrahls ändern,
**dass** der Luftstrahl aus der Kombinationsdüse (21, 23) eine hohe Druckenergie aufweist, dieser Luftstrahl das Luftkissen an den Seitenschürzen abfängt, es in einige Luftkissen aufteilt, unter der gesamten Tragfläche lenkbare (gesteuerte) Überdruckzonen bildet und eine zusätzliche Auftriebskraft erzeugt,
**dass** im hinteren Teil des Körpers des Verkehrsmittels die Hauptdüse (12) und die Hilfs-Laufdüsen (11) beweglich eingebaut sind,
**dass** die Luft zu diesen Düsen aus dem Luftverteilungsabteil (15) von den Lüftern (17, 18) über den Druckweg (26) mit Hilfe eines Klappensystems (19) weitergeleitet wird,
**dass** die Änderung der Neigung und der Drehung der Laufdüsen (11, 12) und die Menge der über diese Düsen mit Hilfe des Klappensystems (19) geförderten Luft Zug- und Steuerkräfte erzeugt, wobei es diese Kräfte ermöglichen, die Geschwindigkeit zu erhöhen und zu vermindern, den Angriffswinkel zu ändern, Rollbewegungen und Wendungen auszuführen sowie die auf das Mehrzweckluftverkehrsmittel im Flug einwirkenden Vertikalkräfte zu stabilisieren,
**dass** die Steuerung des Luftverkehrsmittels im Raum bei Senkrechtstart und -landung durch die Umverteilung der Unterdruckzonen oberhalb der Tragfläche sichergestellt wird, wobei die Profile (3) mit unterschiedlichen Winkeln und an unterschiedlichen Abschnitten der Oberfläche der Flügel (4) geöffnet werden und durch die Umverteilung der Überdruckzone unter der Tragfläche der seitliche und der Längsneigungswinkel der Luftstrahlen durch die Kombinationsdüsen (21, 22) geändert wird.

3. Verfahren nach Anspruch 1,
**dadurch gekennzeichnet,**
**dass** die Luft vom ersten Lüfter (18) mit einem Druck im Bereich von 0,05 bis 0,5 atm und die Luft vom zweiten Lüfter (17) mit einem Druck im Bereich von 0,1 bis 3 atm in getrennten Luftwegen zu den zwei Arten von Düsen (11, 12) hin fließt.

4. Verfahren nach Anspruch 1,
**dadurch gekennzeichnet,**
**dass** die untere Oberfläche des Mehrzweckluftverkehrsmittels in mehrere Teile aufgeteilt ist, um einige Luftkissen zu bilden, die ein unkontrollierbares Überströmen der Luft unter die gesamte Tragfläche verhindern und somit die Kipp- und laterale Stabilität erhöhen

5. Verfahren nach Anspruch 1 bis 3,
**dadurch gekennzeichnet,**
**dass** die Düse (22) an der Unterseite des Mehrzweckflugverkehrsmittels, die die Luft mit dem niedrigeren Kennwert durchlässt, einen diskontinuierlichen Spalt mit einer Breite von 1 cm bis 10 cm bildet und
**dass** die zweite Düse (23) als Kombinationsdüse einen diskontinuierlichen Längsspalt mit einer Breite von 1 cm bis 10 cm bildet und damit beweglich eingebaute separate Düsen aufweist, die mindestens einteilig angeordnet und kreisförmig oder oval ausgebildet sind.

6. Verfahren nach Anspruch 1 bis 4,
**dadurch gekennzeichnet,**
**dass** die Gruppe von Lüftern (17, 18) durch einen Motor (16) angetrieben ist,
**dass** durch die Spalte der etwas geöffneten Profile (3) in der Oberfläche der Flügel (4) Außenluft über den Ansaugweg (25) zu den Lüftern (17, 18) weiter leitbar ist,
**dass** dabei der Luftdruck an der Flügeloberseite abnimmt und eine erste Komponente einer Antriebskraft (U₁) erzeugbar ist,
**dass** am Eintritt in den Saugteil des Ansaugwegs (25) die etwas geöffneten Profile (3) laminar umströmt sind und
**dass** damit an jedem Profil (3) eine zusätzliche Komponente einer Auftriebskraft (U₂) erzeugt ist.

7. Verfahren nach Anspruch 1 bis 5,
**dadurch gekennzeichnet,**
**dass** nach der Erzeugung der beiden Komponenten der Auftriebskräfte (U₁, U₂) die Luft zu den Lüftern (17, 18) gelangt,
**dass** die Luft mit einem Druck P₁ von 0,05 b bis 0,5 atm vom Lüfter (18) und mit einem Druck von P₁ von 0,1 bis 3 atm vom Lüfter (17) in den Luftverteilungsraum (15) pressbar ist und
**dass** danach die Luft über das Klappensystem (19) in den Druckweg des Luftkissens gelangt.

8. Verfahren nach Anspruch 1 bis 6,
**dadurch gekennzeichnet,**
**dass** die Luft mit einem Druck P₂ von den Lüftern (17) über eine Hochdruckleitung zu beweglichen Kreisdüsen (28) gefördert ist, die in den Kombinationsdüsen (23) eingebaut sind,
**dass** die Kombinationsdüsen (23) einen Luftstrom bilden, der unter einem Winkel von 30° bis 90° zur Erdoberfläche von der Peripherie zum Mittelpunkt des Mehrzweckluftverkehrsmittels ausgerichtet ist,
**dass** dabei durch die Luft, welche an den Kreisdüsen (28) ausströmt und eine höhere Druckenergie aufweist, eine "Verstärkungsrolle" gebildet ist,
**dass** diese Luft die Luft mit dem niedrigeren Kennwert aus der Längsdüse (21) mitreißt und eine dichte Luftschürze bildet,
**dass dadurch** das Luftkissen ausfüllbar ist,
**dass** durch die Kombinationsdüse (23) die untere Fläche des Körpers (Rumpfs) und des erzeugten Luftkissens in drei Teile aufgeteilt ist,
**dass** damit ein zuverlässiges Halten des Luftkissens sichergestellt und die Längs- und der Querstabilität des Mehrzweckluftverkehrsmittels erhöht ist und
**dass** durch den Luftdruck auf die untere Fläche der Flügel (4) und des Rumpfs (6) eine weitere Komponente der Antriebskraft (U₃) erzeugt ist.

9. Verfahren nach Anspruch 1 bis 7,
**dadurch gekennzeichnet,**
**dass** im Zustand des Horizontalvorwärtsflugs bei positiven Angriffswinkeln bei einem Nurflügelflugzeug zusätzlich eine kondentionelle Komponente der Auftriebskraft (U₄) erzeugt ist.

10. Verfahren nach Anspruch 1 bis 8,
**dadurch gekennzeichnet,**
**dass** bei geschlossenen Profilen (3) der Luftwiderstand unter Erhöhung der Fluggeschwindigkeit abgebaut ist und
**dass** dabei die Luft über zusätzliche aufklappbare Lufteintritte (5) im hinteren Teil des Rumpfs (6) und der Flügel (4) zu den Düsen (11, 12) am hinteren Teil des Mehrzweckflugverkehrsmittels leitbar ist.

11. Verfahren nach Anspruch 1 bis 9,
**dadurch gekennzeichnet,**
**dass** der untere Teil des Rumpfs (6) mit ausfahrbaren Stützen versehen ist.

12. Mehrzweckluftverkehrsmittel zur Durchführung des Verfahrens nach Anspruch 1 bis 10,
**dadurch gekennzeichnet,**
**dass** es einen Körper, einen Rumpf (6), einen Flugzeugtragflügel (4), Höhen- und Seitenruder (10), ein komplettes Antriebs- und Drucksystem, Hilfs- und Steuerungsmittel aufweist,
**dass** der Körper als Nurflügelflugzeug ausgebildet ist und der Rumpf (6) mit seinem aerodynamischen Profil im mittleren Teil des Körpers angeordnet ist,
**dass** die Oberfläche der Flügel (4) bzw. ein Teil davon mit Hilfe von aerodynamischen Profilen (3) ausgebildet ist, welche beweglich in die Flügel (4) eingebaut sind und zwar so, dass sie geöffnet und geschlossen werden können,
**dass** dabei die Fläche der in den Flügeln (4) gebildeten Lufteinlassspalte, der Luftstrom im Anstellwinkel und die erzeugte Auftriebskraft veränderbar sind,
**dass** das komplette Antriebs- und Drucksystem innerhalb des Körpers untergebracht ist und über seine Grenze nicht hinausgeht,
**dass** die Kanäle des Luftwegs innerhalb des Körpers angeordnet sind,
**dass** der eigentliche Luftweg aus zwei Teilen, einem Ansaugteil und einem Druckteil besteht, wobei der Ansaugteil Ansaugluftwege (25) mit einem Klappensystem (19) einschließt,
**dass** sich die Ansaugluftwege (25) innerhalb der Flügel (4) unter den aerodynamischen Profilen (3) befinden,
**dass** das komplette Antriebs- und Drucksystem eine Gruppe von Lüftern (17, 18) von mindestens zwei Bautypen aufweist,
**dass** die Lüfter (17, 18) innerhalb des Körpers liegen, ohne über dessen Außenmaße hinauszugehen,
**dass** dabei Luft vom ersten Lüfter (18) mit einem Druck P₁ von 0,05 bis 0,5 atm und Luft vom zweiten Lüfter (17) mit einem Druck P₁ von 0,1 bis 3 atm über getrennte Luftwege zu zwei Arten von Düsen (21, 22, 23) fließt,
**dass** die Düsen umlaufend oder teilweise am Umfang der unteren Fläche (20) des Körpers angeordnet sind,
**dass** die erste Düse (22) einen diskontinuierlichen Spalt darstellt und die Luft mit niedrigeren Druckkennwerten durchlässt,
**dass** die zweite Kombinationsdüse (23) einen diskontinuierlichen Längsspalt mit darin beweglich eingebauten, separaten Kreis- und/oder Ovaldüsen darstellt und zwar so, dass sie ihren seitlichen und Längsneigungswinkel ändern können,
**dass** die untere Oberfläche (20) des Mehrzweckflugverkehrsmittels durch die Kombinationsdüse (23) in mehrere Teile aufgeteilt ist, um einige Luftkissen zu bilden,
**dass** im hinteren Teil des Mehrzweckflugverkehrsmittels eine Hauptlaufdüse (12) und Hilfs-Laufdüsen (11) beweglich eingebaut sind,
**dass** die Luft aus einem Luftverteilungsabteil (15) von der Gruppe der Lüfter (17, 18) über einen Austrittsluftweg (26) mit Hilfe des Klappensystems (19) zu diesen Düsen (11, 12) leitbar ist, wobei, um die auf das Mehrzweckflugverkehrsmittel im Flug einwirkenden Vertikalkräfte zu stabilisieren, die Flosse (8) mit drei Höhenrudern (9) ausgebildet ist,
**dass** die Außenruder als Querruder eingesetzt sind und
**dass** die Kursstabilität durch zwei Kielflossen (7) mit Seitenrudern (10) sichergestellt ist.
